# EUROPEAN PATENT APPLICATION

(11) **EP 2 535 106 A1**
(43) Date of publication of application: **19.12.2012**
(21) Application number: 11742235.2
(22) Date of filing: 09.02.2011
(51) Int. Cl.: B01J 27/199, B01D 53/94

(54) **NOX REDUCTION CATALYST FOR EXHAUST GAS OF BIOMASS COMBUSTION AND NOX REDUCTION METHOD**

(30) Priority: 09.02.2010 JP 2010026577
(71) Applicant: Babcock-Hitachi Kabushiki Kaisha, Chiyoda-ku Tokyo 101-0021 (JP)
(72) Inventor: KATO, Yasuyoshi, Kure-shi Hiroshima 737-0029 (JP)
(74) Representative: Jenkins, Peter David
(86) International application number: PCT/JP2011/052688
(87) International publication number: WO 2011/099492

(57) **Abstract**

In light of the fact that a catalyst of the prior art rapidly deteriorates in an exhaust gas of biomass combustion, the present invention realizes a NOₓ reduction catalyst which is less likely to be deteriorated even if used in a treatment of an exhaust gas containing a high concentration of potassium component in a combustion ash, like an exhaust gas of biomass combustion, and provides a method for reduction of NOₓ in an exhaust gas of biomass combustion with high efficiency for a long period using the catalyst. A catalyst for purification of an exhaust gas, in which the catalyst is obtained by bringing titanium oxide into contact with phosphoric acid or a phosphoric acid ammonium salt in an amount of more than 1% by weight and not more than 15% by weight, in terms of H₃PO₄, with respect to the titanium oxide in the presence of water thereby to cause adsorption of phosphoric acid ions on a surface, and then supporting more than 0% by atom and not more than 8% by atom of an oxo-acid of molybdenum (Mo) and/or tungsten (W) or an oxo-acid salt of molybdenum (Mo) and/or tungsten (W), and an oxo-acid salt of vanadium (V) or a vanadyl salt on the titanium oxide.

## Description

### TECHNICAL FIELD

The present invention relates to an exhaust gas purification catalyst and a method for purification of an exhaust gas using the catalyst, and particularly to a catalyst for reduction of nitrogen oxide with ammonia (NH₃), wherein the catalyst is prevented from deterioration by potassium compound contained in an exhaust combustion gas of biomass , and a NO_{X} reduction method for an exhaust combustion gas of biomass using the catalyst.

### BACKGROUND ART

Global warming caused by an increase in concentration of CO₂ in the atmosphere has being proceeding in a rate higher than expected, and thus the reduction of CO₂ emissions is now an urgent issue. As the reduction measure of CO₂ emissions, measures relating to the use of fossil fuels, such as energy saving for reduction in use amount of fossil fuels, and recovery and isolation of CO₂ in an exhaust combustion gas; employment of natural energy such as solar battery and wind power generation have been taken. Additionally, power generation using biomass as a fuel, in place of the fossil fuel, has attracted attention as a method which does not cause an increase in CO₂, and particularly in Europe, this method has begun to be widely employed in the form of mono-fuel combustion of biomass or mixed combustion of biomass and a fossil fuel.

Such an exhaust combustion gas of biomass has an advantage that it contains less sulfur as compared with the fossil fuel. However, it is known that combustion ashes of materials derived from plants, such as wood chips and peat, contain a large amount of deliquescent potassium carbonate and cause a phenomenon in which a catalyst used in NOₓ reduction of an exhaust gas quickly deteriorates.

Patent Document 1 discloses a method in which phosphoric acid is adsorbed on a surface of a titania carrier and, after burning, vanadium is supported thereon so as to prevent sintering of the titania carrier with vanadium in a NOₓ reduction catalyst for ammonia catalytic reduction. However, it does not disclose at all a treatment of an exhaust gas containing a high concentration of a potassium component, such as an exhaust gas from a biomass fuel, and resulting poisoning of a catalyst.

### PRIOR ART LIST

Patent Document 1 : JP H07-232075 A

### SUMMARY OF THE INVENTION

### PROBLEMS TO BE RESOLVED BY THE INVENTION

In light of the fact that a catalyst of the prior art rapidly deteriorates in an exhaust combustion gas of biomass, an object of the present invention is to realize a NOₓ reduction catalyst which is less likely to be deteriorated even if used in a treatment of an exhaust gas containing a high concentration of potassium component in a combustion ash, like an exhaust combustion gas of biomass, and to provide a method for reduction of NOₓ in an exhaust combustion gas of biomass with high efficiency for a long period using the catalyst.

### MEANS FOR SOLVING THE PROBLEMS

In order to achieve the above object, inventions claimed in the present application are as follows.
(1) A catalyst for purification of an exhaust gas, in which the catalyst is obtained by bringing titanium oxide into contact with phosphoric acid or a phosphoric acid ammonium salt in an amount of more than 1% by weight and not more than 15% by weight, in terms of H₃PO₄, with respect to the titanium oxide in the presence of water thereby to cause adsorption of phosphoric acid ions on a surface of the titanium oxide, and then supporting more than 0% by atom and not more than 8% by atom of an oxo-acid of molybdenum (Mo) and/or tungsten (W) or an oxo-acid salt of molybdenum (Mo) and/or tungsten (W), and an oxo-acid salt of vanadium (V) or a vanadyl salt on the titanium oxide.
(2) The catalyst according to (1), wherein the amount of the phosphoric acid or phosphoric acid ammonium salt is more than 1% by weight and not more than 10% by weight, in terms of H₃PO₄, with respect to the titanium oxide.
(3) A method for purification of an exhaust gas, in which the method comprises blowing NH₃, as a reducing agent, into an exhaust gas obtained by mono-fuel combustion of a biomass, or mixed combustion of a biomass and a fossil fuel, and then bringing the exhaust gas into contact with the catalyst according to (1) or (2), and reducing nitrogen oxide contained in the exhaust gas thereby to remove the nitrogen oxide.

The present inventor has studied in detail about the process in which a NOₓ reduction catalyst undergoes poisoning by a potassium compound contained in a biomass combustion ash and found that potassium mostly exists in the form of a carbonic acid salt, and deliquesces in a high wet state when started or stopped, followed by penetration into the catalyst and further adsorption at an ammonia (NH₃) adsorption site existing on titanium oxide (TiO₂), and thus inhibiting adsorption of NH₃, resulting in deactivation of the catalyst. Accordingly, the present invention has been completed. The mechanism for deactivation of a catalyst due to potassium carbonate and for the catalyst of the present invention for suppressing the deactivation will be schematically described below.

NH₃, which is a reducing agent used in a NOₓ reduction reaction, is adsorbed on an OH group which is an acid center on titanium oxide, as shown in Scheme 1. On the other hand, potassium ions in potassium carbonate, which have penetrated into a catalyst, are also adsorbed on an OH group, as shown in Scheme 2, and inhibit adsorption of NH₃ since adsorption power of the potassium ion is stronger than that of NH₃. This is the cause of deactivation of the NOₓ reduction catalyst due to potassium, and causes a rapid decrease in a NOₓ reduction rate in a NOₓ reduction catalyst in an exhaust combustion gas of biomass.

NH₃+HO-Ti- (active site on TiO₂) → NH₄-O-Ti- (Scheme 1)

1/2K₂CO₃+HO-Ti- (active site on TiO₂) → K-O-Ti- + 1/2H₂O + 1/2CO₂ (Scheme 2)

In contrast, regarding the catalyst of the present invention, phosphoric acid ions are adsorbed at some of active sites of TiO₂ in advance, as shown in Scheme 3, thereby almost all of the penetrated potassium ions are first reacted with ions of phosphoric acid, whose acidity is stronger than that of the NH₃ adsorption site (Scheme 3), to form an OH group on TiO₂. Since this OH group serves as an adsorption site of NH₃ and compensates the adsorption sites of NH₃ decreased in Scheme 2, it is possible to remarkably decrease a deterioration rate.

H₃PO₄ + 3(HO-Ti-) → PO₄(-Ti-)₃ + 3/2H₂O (Scheme 3)

3/2K₂CO₃ + PO₄(-Ti-)₃ + 3/2H₂O → K₃PO₄ + 3 (HO-Ti-) (Scheme 4)

### ADVANTAGEOUS EFFECTS OF THE INVENTION

According to the present invention, it is possible to drastically decrease deterioration of a catalyst due to a potassium compound contained in an exhaust gas, thereby making it possible to maintain high performances of a NOₓ reduction apparatus of an exhaust combustion gas from a biomass fuel and to drastically decrease operational costs of the NOₓ reduction apparatus, by decrease in frequency of catalyst replacement and the like.

### EMBODIMENTS FOR CARRYING OUT THE INVENTION

The catalyst of the present invention is characterized by using TiO₂ including phosphoric acid ions, which are reacted with potassium ions to form a NH₃ adsorption site, adsorbed thereon, and then supporting, as active components, more than 0% by atom and not more than 8% by atom of an oxo-acid of Mo and/or W or an oxo-acid salt of Mo and/or W, and an oxo-acid salt of V or a vanadyl salt thereon. When the present invention is carried out, it is necessary to take the following points into consideration.

The amount of PO₄ ions to be adsorbed on titanium oxide is about 5% by weight per surface area of TiO₂. In the case of a conventionally used TiO₂ raw material of 100 m²/g to 300 m²/g, the maximum adsorbable amount is from 5% by weight to 15% by weight. When the amount is more than the above range, OH groups capable of being adsorbed by NH₃ disappear, and thus causing great decrease in activity. Although depending on the type of the TiO₂ raw material, the additive amount of H₃PO₄ is set to 15% by weight or less, and preferably 10% by weight or less, with respect to TiO₂ since it is easy to balance durability with NOₓ reduction activity, resulting in satisfactory results. There is no limitation on the lower limit of the additive amount. However, in order to achieve remarkable K-poisoning resistance, the lower limit is desirably set to 1% by weight or more with respect to TiO₂.

It is possible to use, as an active component which is to be added to TiO₂ having absorbed phosphoric acid ions, an oxo-acid of molybdenum (Mo) and/or tungsten (W) or an oxo-acid salt of molybdenum (Mo) and/or tungsten (W) and an oxo-acid salt of vanadium (V) or a vanadyl salt. There is no particular limitation on the additive amount, and each additive amount is preferably more than 0% by atom and not more than 8% by atom with respect to TiO₂. It is favorable that a high value is selected when the TiO₂ raw material has a large specific surface area, whereas, a low value is selected when the TiO₂ raw material has a small specific surface area since high NO_{X} reduction performances can be maintained and oxidation performances of SO₂ can be lowered.
In the catalyst of the present invention, the addition method of these active components may be any method and the method of kneading or kneading under heating in the presence of water is economical and excellent. The catalyst component including the active components supported thereon is used after forming into a honeycomb shape by a known method. Alternatively, the active components are applied so as to fill meshes of a metal substrate formed into a net-like shape or a net-like material of a ceramic fiber thereby to form a plate-like material, and then a spacer portion was formed into a wavy shape and the plate-like materials were piled, and thus the obtained pile can be used as a catalyst structure in a catalytic apparatus. In particular, the latter is likely to give preferable results since ashes containing a potassium compound are less likely to accumulate between catalysts.

It is also possible to add a silica sol which is a binder used for forming, and an inorganic fiber used for reinforcing to the catalyst of the present invention. The thus obtained catalyst is also included in the scope of the present invention, as a matter of course.

### EXAMPLES

The present invention will be described in detail below by way of specific examples.

### [Example 1]

In a kneader, 900 g of titanium oxide (having a specific surface area of 290 m²/g, manufactured by ISHIHARA SANGYO KAISHA, LTD.), 84.5 g of 85% phosphoric acid, 219 g of silica sol (OS sol, manufactured by Nissan Chemical Industries, Ltd.) and 5568 g of water were charged and then kneaded for 45 minutes to adsorb phosphoric acid on a surface of TiO₂. To the kneaded mixture, 113 g of ammonium molybdate and 105 g of ammonium metavanadate were added, followed by kneading for 1 hour to support a compound of Mo and V on the surface of TiO₂ including phosphoric acid adsorbed thereon. Thereafter, kneading was performed for 30 minutes while gradually adding 151 g of a silica alumina-based ceramic fiber (manufactured by Toshiba Fine Flex Co. , Ltd.) to obtain a uniform pasty material. The obtained paste was placed on a 0.7 mm thick base material lined with metal lath of a 0.2 mm thick SUS430 steel sheet and then the base material was interposed between two polyethylene sheets, followed by passing through a pair of pressure rollers to fill meshes of the metal lath base material. After air cooling, burning was performed at 500°C for 2 hours to obtain a catalyst of the present invention. This catalyst had composition atomic ratio of Ti/Mo/V = 88/5/7, and the additive amount of H₃PO₄ was 8% by weight with respect to TiO₂.

### [Examples 2 and 3]

In the same manner as in Example 1, except that the additive amount (84.5 g) of phosphoric acid was changed to 10.6 g and 42.4 g, respectively, catalysts were prepared.

### [Example 4]

In the same manner as in Example 1, except that the additive amount of phosphoric acid was changed to 159 g and the additive amount of ammonium metavanadate was changed to 121 g, respectively, a catalyst was prepared. This catalyst had composition atomic ration of Ti/Mo/V = 88/5/8, and the additive amount of H₃PO₄ is 15% by weight with respect to TiO₂.

### [Examples 5 and 6]

In the same manner as in Example 1, except that titanium oxide used in Example 1 was changed to titanium oxide having a specific surface area of 90 m²/g and the additive amount of phosphoric acid was changed to 4% by weight with respect to TiO₂, and also the amounts of ammonium metavanadate and ammonium molybdate were changed to 6.8 g and 61.8 g, and 27.7 g and 62.7 g, respectively, catalysts were prepared. These catalysts had composition atomic ratios of Ti/Mo/V = 96.5/3/0.5 and 95/3/2, and the additive amount of H₃PO₄ was 4% by weight with respect to TiO₂.

### [Example 7]

In the same manner as in Example 1, except that 113 g of ammonium molybdate used in the catalyst of Example 1 was changed to 162 g of ammonium metatungstate, a catalyst was prepared. This catalyst had composition atomic ratio of Ti/W/V = 88/5/7, and the additive amount of H₃PO₄ was 8% by weight with respect to TiO₂.

### [Comparative Examples 1 to 4]

In the same manner as in Examples 1 and 5 to 7, except that the addition of phosphoric acid and the adsorption treatment were not performed, catalysts were prepared.

### [Test Example]

Each of the catalysts of Examples 1 to 7 and Comparative Examples 1 to 4 was cut into test pieces each measuring 20 mm in width and 100 mm in length. In order to simulate deterioration due to a potassium compound contained in a biomass combustion ash, each test piece was impregnated with an aqueous solution of potassium carbonate such that the additive amount becomes 0.5% by weight, in terms of K₂O, with respect to a catalyst component and then dried at 150°C.

Using three pieces of the catalysts after the above simulation test and three pieces of the catalysts before the simulation test, NOₓ reduction performances of each catalyst were measured under the conditions shown in Table 1 and poison resistance of each catalyst against K deterioration was evaluated. The obtained results are collectively shown in Table 2.

In Table 1, the catalysts of Examples exhibit less deterioration of NOₓ reduction performances after the simulation test, whereas, the catalysts of Comparative Examples exhibit severe deterioration. As described above, the catalyst of the present invention can drastically decrease deterioration due to a potassium compound, thereby making it possible to maintain high performances of a NO_{X} reduction apparatus of an exhaust combustion gas from a biomass fuel for a long period. As a result, it becomes possible to drastically decrease the frequency of catalyst replacement and to drastically decrease operational costs of the NOₓ reduction apparatus.

[Table 1]

**Tab. 1**

| Items | Value |
|---|---|
| 1. Ratio of Gas | |
| NO_{X} | 200 ppm |
| NH₃ | 240 ppm |
| SO₂ | 500 ppm |
| O₂ | 3% |
| CO₂ | 12% |
| H₂O | 12% |
| 2. Gas flow rate | 3.7 litter/minute |
| 3. Temperature | 350°C |
| 4. Amount of catalyst packed | 20 mm in width and 100 mm in total length, three pieces |

[Table 2]

**Tab. 2**

| Catalyst | Initial NOₓ reduction rate (%) | NO_{X} reduction rate (%) after potassium deterioration test |
|---|---|---|
| Ex. 1 | 98.2 | 98.0 |
| Ex. 2 | 99.3 | 93.6 |
| Ex. 3 | 98.9 | 97.8 |
| Ex. 4 | 97.8 | 97.3 |
| Ex. 5 | 94.5 | 83.4 |
| Ex. 6 | 97.3 | 87.5 |
| Ex. 7 | 98.6 | 97.6 |
| Comp. Ex. 1 | 99.2 | 78.4 |
| Comp. Ex. 2 | 96.4 | 62.7 |
| Comp. Ex. 3 | 98.2 | 69.9 |
| Comp. Ex. 4 | 99.5 | 72.5 |

## Claims

1. A catalyst for purification of an exhaust gas, in which the catalyst is obtained by bringing titanium oxide into contact with phosphoric acid or a phosphoric acid ammonium salt in an amount of more than 1% by weight and not more than 15% by weight, in terms of H₃PO₄, with respect to the titanium oxide in the presence of water thereby to cause adsorption of phosphoric acid ions on a surface, and then supporting more than 0% by atom and not more than 8% by atom of an oxo-acid of molybdenum (Mo) and/or tungsten (W) or an oxo-acid salt of molybdenum (Mo) and/or tungsten (W), and an oxo-acid salt of vanadium (V) or a vanadyl salt on the titanium oxide.

2. The catalyst according to claim 1, wherein the amount of the phosphoric acid or phosphoric acid ammonium salt is more than 1% by weight and not more than 10% by weight, in terms of H₃PO₄, with respect to the titanium oxide.

3. A method for purification of an exhaust gas, in which the method comprises blowing NH₃, as a reducing agent, into an exhaust gas obtained by mono-fuel combustion of a biomass, or mixed combustion of biomass and a fossil fuel, and then bringing the exhaust gas into contact with the catalyst according to claim 1 or 2, and reducing nitrogen oxide contained in the exhaust gas thereby to remove the nitrogen oxide.
